# EUROPÄISCHE PATENTANMELDUNG

(11) **EP 2 702 868 A1**
(43) Veröffentlichungstag der Anmeldung: **05.03.2014**
(21) Anmeldenummer: 13182209.0
(22) Anmeldetag: 29.08.2013
(51) Int. Cl.: A01K 15/02

(54) **Kauelement und Verfahren zu dessen Herstellung**

(30) Priorität: 03.09.2012 DE 102012215607
(71) Anmelder: Finnern GmbH & Co. KG, 27283 Verden (DE)
(72) Erfinder: Finnern, Joachim, 27283 Verden (DE)
(74) Vertreter: Eisenführ Speiser

(57) **Zusammenfassung**

Die vorliegende Erfindung betrifft ein Kauelement (1-8) mit einer ersten Komponente (12) und einer zweiten Komponente (14) sowie ein Verfahren (50) zur Herstellung eines solchen Kauelements (1-8), also ein Kauelement (1-8) mit einer ersten Komponente (12) und einer zweiten Komponente (14), wobei die Komponenten (12, 14) wenigstens zwei Öffnungen (16), insbesondere Schlitze (16), aufweisen und derart durch die Öffnungen (16) hindurch miteinander verschränkt sind, dass abwechselnd eine Oberseite der ersten oder zweiten Komponente (12, 14) der Unterseite der zweiten oder ersten Komponente (14, 12) und eine Unterseite der ersten oder zweiten Komponente (12, 14) der Oberseite der zweiten oder ersten Komponente (12, 14) gegenüberliegt.

## Beschreibung

Die vorliegende Erfindung betrifft ein Kauelement mit einer ersten Komponente und einer zweiten Komponente sowie ein Verfahren zur Herstellung eines solchen Kauelements.

Insbesondere für Hunde sind Kauelemente bekannt, die aus einer Kombination von Tierhaut, beispielsweise Rinderhaut, und einem Fleischprodukt bestehen. Das Fleischprodukt regt den Hund über den Geschmack zur Beschäftigung mit dem Kauelement an, während die Tierhaut, die in der Regel eher wenig Eigengeschmack aufweist, sicherstellen soll, dass eine ausreichende Beständigkeit gegenüber dem Kauen des Hundes besteht.

Bekannte Kauelemente werden beispielweise so hergestellt, dass einerseits das Fleischprodukt in die Rinderhaut eingewickelt ist oder andererseits Fleischstreifen um die Rinderhaut gewickelt sind. Bei anderen Kauelementen wird ein Anhaften von Fleischprodukt und Rinderhaut durch geeignete Herstellung oder Nutzung eines Haftmittels vorgesehen.

Es ist wünschenswert, die einzelnen Komponenten eines Kauelements so miteinander zu verbinden, dass beim Kauen durch das Tier die Komponenten weitgehend miteinander verbunden bleiben, da ansonsten bei einer leichten Trennung von Fleischprodukt und Rinderhaut das Tier lediglich das Fleischprodukt zu sich nimmt und danach die Rinderhaut ignoriert. Bleiben beide Komponenten im Wesentlichen miteinander verbunden, ergibt sich für das kauende Tier ein längeres Kauvergnügen, das vor allem zur Zahn- bzw. Gebiss-Pflege wünschenswert ist.

Nachteilig an den bekannten Lösungen, die auf einem gegenseitigen Umwickeln beruhen, ist es, dass einerseits das Herstellung selbst eine komplexe Maschinerie notwendig macht und andererseits primär die Hautkomponente oder primär die Fleischkomponente an der Außenseite des Kauelements angeordnet ist, so dass entweder die Geschmackswirkung oder die Kaubeständigkeit beeinträchtigt ist. Kauelemente, die vor allem auf einem Anhaften oder Verkleben der Komponenten aufbauen, sind der Gefahr ausgesetzt, dass die Haft- oder Klebewirkung infolge des Kauens nachlässt und sich die Komponenten dann voneinander trennen.

Vor diesem Hintergrund ist ein Ziel der vorliegenden Erfindung ein Kauelement vorzustellen, bei dem die Nachteile der bekannten Kauelemente vermieden oder zumindest verringert werden. Ebenso ist es ein Ziel der vorliegenden Erfindung, ein entsprechendes Verfahren zur Herstellung eines solchen Kauelements vorzustellen.

Erfindungsgemäß ist ein Kauelement mit einer ersten Komponente und einer zweiten Komponente vorgesehen, wobei die Komponenten wenigstens zwei Öffnungen, insbesondere Schlitze, aufweisen und derart durch die Öffnungen hindurch miteinander verschränkt sind, dass abwechselnd eine Oberseite der ersten oder zweiten Komponente der Unterseite der zweiten oder ersten Komponente und eine Unterseite der ersten oder zweiten Komponente der Oberseite der zweiten oder ersten Komponente gegenüberliegt.

Erfindungsgemäß ist zudem ein Verfahren zur Herstellung eines Kauelementes mit einer ersten Komponente und einer zweiten Komponente vorgesehen, die miteinander verschränkt sind, mit den Schritten: Bereitstellen der ersten und zweiten Komponente, Anbringen von wenigstens zwei Öffnungen, insbesondere Schlitzen, an der ersten und/oder zweiten Komponente, Verschränken der ersten und zweiten Komponente durch die Öffnungen hindurch miteinander, derart, dass abwechselnd eine Oberseite der ersten oder zweiten Komponente der Unterseite der zweiten oder ersten Komponente und eine Unterseite der ersten oder zweiten Komponente der Oberseite der zweiten oder ersten Komponente gegenüberliegt.

Es wurde gefunden, dass überraschenderweise bereits eine mechanische Verschränkung, wie sie hier beschrieben ist, eine für die Zwecke eines Kauelements ausreichende Verbindung der einzelnen Komponenten miteinander erlaubt.

In einer Ausführungsform weist eine der Komponenten wenigstens zwei Öffnungen auf. Es wurde gefunden, dass insbesondere bei kleineren Kauelementen bereits zwei Öffnungen eine ausreichende Verschränkung der Komponenten erlauben. Es ist dabei nicht notwendig, dass die Öffnungen in der gleichen Komponente befinden.

In einer weiteren Ausführungsform weist eine der Komponenten ein Schlitzpaar oder mehrere Schlitzpaare auf, das bzw. die jeweils einen Streifen der einen Komponente definiert bzw. definieren, wobei die andere der Komponenten, die in einem Bereich außerhalb des bzw. der Streifen einer Seite der einen Komponente gegenüberliegt, im Bereich des bzw. der Streifen der anderen Seite der einen Komponente gegenüberliegt.

In einer weiteren Ausführungsform weist wenigstens eine der Komponenten einen umgelegten Zungenbereich auf, der sich durch wenigstens eine Öffnung in der anderen Komponente hindurch erstreckt.

Ein solcher Zungenbereich führt zu einer zusätzlichen Verschränkung und verbessert damit die Verbindung zwischen den Komponenten des Kauelements. Es ist dabei nicht zwingend, aber möglich, dass die Komponenten einen gemeinsamen Zungenbereich aufweisen, der beispielsweise durch gemeinsames oder getrenntes Stanzen eine U-förmigen, Trapez-förmigen oder dreieckigen Bereichs erreicht und gemeinsam durch die dabei erzeugte Öffnung umgelegt ist. Es ist ebenso möglich, dass nur eine der Komponenten den Zungenbereich aufweist, der sich dann beispielsweise durch einen Schlitz in der anderen Komponente erstreckt. Es ist zudem in jedem Fall möglich, dass sich der umgelegte Zungenbereich wiederum durch einen weiteren Schlitz (oder weitere Schlitze) erstreckt, um die Verschränkung noch weiter zu verbessern. Es können auch mehrere Zungenbereiche vorgesehen sein, etwa in einem Bereich, die dem benachbarte Öffnungen ansonsten relativ weit voneinander beabstandet sind oder in den Bereichen zwischen den jeweiligen Ende des Komponenten und der ansonsten nächstgelegenen Öffnungen, durch die sich eine der Komponenten erstreckt.

In einer weiteren Ausführungsform ist die erste Komponente eine Kaukomponente und die zweite Komponente eine Geschmackskomponente.

Die Erfindung ist allerdings nicht auf nur eine Kaukomponente und nicht auf nur eine Geschmackskomponente beschränkt.

In einer spezielleren Ausführungsform weist die Kaukomponente wenigstens zwei Schlitze auf, wobei die Kaukomponente in einer weiteren Ausführungsform aus Tierhaut besteht oder Tierhaut umfasst, insbesondere Rinderhaut, Schweinehaut, Pferdehaut und/oder Lammhaut und die Geschmackskomponente aus einem Fleischprodukt und/oder einem Fischprodukt besteht oder ein Fleischprodukt und/oder ein Fischprodukt umfasst, insbesondere ein Fleischprodukt auf Basis von Hühnerfleisch, Entenfleisch, Putenfleisch, Kaninchenfleisch, Lammfleisch, Rinderfleisch, Pferdefleisch und/oder Schweinefleisch.

Die Geschmackskomponente umfasst vorteilhafterweise Fleisch oder andere Teile mindestens einer Tierart. Eine Kombination aus Produkten von unterschiedlichen Tierarten ist möglich, z.B. Huhn und Entenfleisch. Neben Fleisch als Ausgangspunkt für die Geschmackskomponente können auch Innereien vorgesehen werden, z.B. Leber, auch mit dem Fleisch gemischt. Denkbar ist auch eine Kombination von Fleisch mit Getreide oder einem anderen pflanzlichen Erzeugnis wie z.B. Reis, Gerste, Weizen, Luzerne oder Hülsenfrüchte wie z.B. Soja, Erbsen oder aber Gemüse wie z.B. Karotten, Spinat, Tomate, Kürbis, Kartoffel oder auch Früchten wie z.B. Apfel, Kiwi, Ananas.

In einer weiteren Ausführungsform umfasst eine der Komponenten die andere Komponente an wenigstens einer Kante.

Mit dem Umlegen einer Komponente um eine Kante der anderen Komponente ergibt sich eine weitere Verschränkung, wobei der umgelegte Teil der einen Komponente im Sinne eine verbesserten Fixierung wiederum durch eine Öffnung in der anderen Komponente geführt sein kann, was auch durch die erwähnte Umlegung eines Zungenbereichs erreicht werden kann. Alternativ oder ergänzend kann beim Umlegen auch ein Verkleben der umgelegten Komponenten mit sich selbst oder der anderen Komponente vorgesehen sein. Das Vorstehende gilt auch, wenn sich das Umfassen der einen Komponente über die gesamte andere Komponente erstreckt.

In einer Ausführungsform haftet wenigstens ein Teil der einen Oberseite der ersten oder zweiten Komponente an der Unterseite der zweiten oder ersten Komponente und/oder ein Teil der einen Unterseite der ersten oder zweiten Komponente an der Oberseite der zweiten oder ersten Komponente an.

Zur weiteren Verbesserung der Verbindung der einzelnen Komponenten kann ein Kleben oder Verhaften der Komponenten miteinander bzw. aufeinander

In einer Ausführungsform wird das Anhaften durch ein Haftmittel unterstützt, insbesondere durch ein Haftmittel auf Basis von Stärke, Sojaprotein, Gluten, Eiverbindungen und/oder Eipulver.

Es ist möglich, die Komponenten des Kauelements zusätzlich zur Verschränkung durch eine Art Klebstoff in Form von z.B. Stärke bzw. stärkeähnlichen Produkten wie Sojaprotein, Gluten oder Eiverbindungen/Eipulver zu verbinden.

In diesem Zusammenhang oder auch unabhängig davon, ist es zudem möglich, weitere Zutaten zu vorzusehen, die beispielsweise der Gesunderhaltung des Tiers dienen, insbesondere hinsichtlich Knochen- und Gelenkbau (z.B. Kalzium, Chondroitin, Glucosamin, etc.), des Gebisses (z.B. Enzyme), der Verdaulichkeit (z.B. Flohsamen), des Fell (z.B. Biotin).

Im Folgenden wird die vorliegende Erfindung anhand von Ausführungsbeispielen unter Bezug auf die Zeichnungen weiter erläutert. Hierbei zeigt
- Fig. 1a a: eine schematische Sicht einer Oberseite eines ersten Ausführungsbeispiels eines erfindungsgemäßen Kauelements,
- Fig. 1b: eine schematische Sicht der Unterseite des Ausführungsbeispiels aus Fig. 1a,
- Fig. 1c: eine schematische Seitenansicht des Ausführungsbeispiels aus Fig. 1a und 1b,
- Fig. 2a: eine schematische Sicht einer Oberseite eines zweiten Ausführungsbeispiels eines erfindungsgemäßen Kauelements,
- Fig. 2b: eine schematische Sicht der Unterseite des Ausführungsbeispiels aus Fig. 2a,
- Fig. 2c: eine schematische Seitenansicht des Ausführungsbeispiels aus Fig. 2a und 2b,
- Fig. 3a: eine schematische Sicht einer Oberseite eines dritten Ausführungsbeispiels eines erfindungsgemäßen Kauelements,
- Fig. 3b: eine schematische Sicht der Unterseite des Ausführungsbeispiels aus Fig. 3a,
- Fig. 3c: eine schematische Seitenansicht des Ausführungsbeispiels aus Fig. 3a und 3b,
- Fig. 4a: eine schematische Sicht einer Oberseite eines vierten Ausführungsbeispiels eines erfindungsgemäßen Kauelements,
- Fig. 4b: eine schematische Sicht der Unterseite des Ausführungsbeispiels aus Fig. 4a,
- Fig. 4c: eine schematische Seitenansicht des Ausführungsbeispiels aus Fig. 4a und 4b,
- Fig. 5a: eine schematische Sicht einer Oberseite eines fünften Ausführungsbeispiels eines erfindungsgemäßen Kauelements,
- Fig. 5b: eine schematische Sicht der Unterseite des Ausführungsbeispiels aus Fig. 5a,
- Fig. 5c: eine schematische Seitenansicht des Ausführungsbeispiels aus Fig. 5a und 5b,
- Fig. 6a: eine schematische Sicht einer Oberseite eines sechsten Ausführungsbeispiels eines erfindungsgemäßen Kauelements,
- Fig. 6b: eine schematische Seitenansicht des Ausführungsbeispiels aus Fig. 6a,
- Fig. 7a: eine schematische Sicht einer Oberseite eines siebten Ausführungsbeispiels eines erfindungsgemäßen Kauelements,
- Fig. 7b: eine schematische Sicht der Unterseite des Ausführungsbeispiels aus Fig. 7a,
- Fig. 8: eine schematische Sicht einer Oberseite einer modifizierten Version des siebten Ausführungsbeispiels aus Fig. 7a,
- Fig. 9: eine schematische Darstellung eines Ablaufdiagramms eines Ausführungsbeispiels eines erfindungsgemäßen Verfahrens.

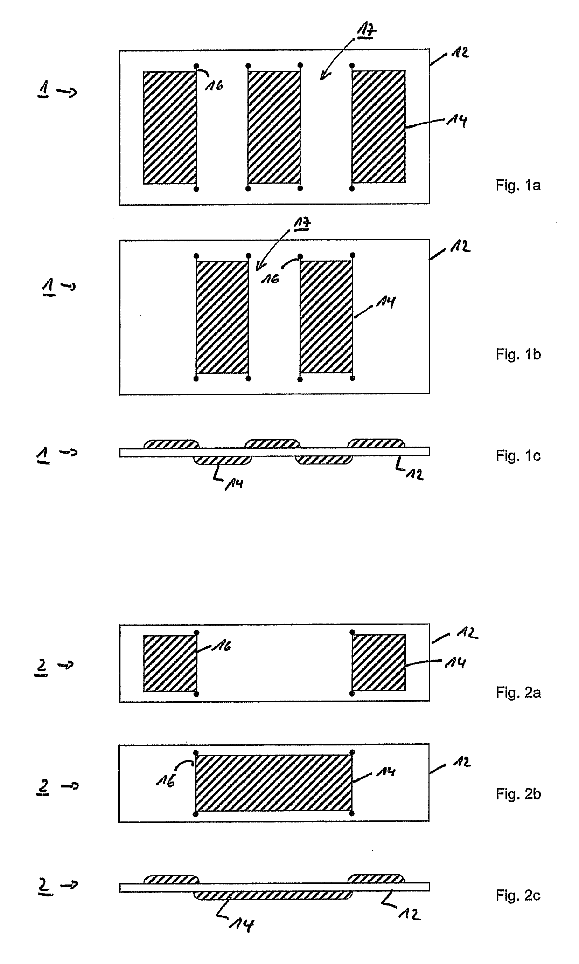

Figur 1a zeigt eine schematische Sicht einer Oberseite eines ersten Ausführungsbeispiels eines erfindungsgemäßen Kauelements. Figur 1b zeigt eine schematische Sicht der Unterseite des Ausführungsbeispiels aus Figur 1a. Figur 1c zeigt eine schematische Seitenansicht des Ausführungsbeispiels aus den Figuren 1 a und 1 b.

Das Kauelement 1 umfasst eine erste Komponente 12 und eine zweite Komponente 14, wobei die erste Komponente 12 mit insgesamt vier Schlitzen 16 versehen ist, die ihrerseits drei Streifen 17 in der ersten Komponente 12 definieren. Wie anhand der Darstellung in den Figuren 1a bis 1c zu erkennen ist, erstreckt sich die zweite Komponente (in der Darstellung von links nach rechts) von einer Oberseite der ersten Komponente (Figur 1a) durch den ersten Schlitz 16 auf die Unterseite der ersten Komponente 12 (Figur 1 b), durch den zweiten Schlitz 16 wieder auf die Oberseite der ersten Komponente 12 (Figur 1a), durch den dritten Schlitz 16 wiederum entlang der Unterseite der ersten Komponente 12 (Figur 1 b) und schließlich durch den vierten Schlitz 16 wiederum auf die Oberseite der ersten Komponente 12 (Figur 1a). Wie insbesondere aus der Darstellung von Figur 1c zu erkennen ist, liegt die Unterseite der zweiten Komponente 14 in den Bereichen, die in Figur 1a zu erkennen sind, der Oberseite der ersten Komponente 12 gegenüber, während in den Bereichen der zweiten Komponente 14, die in der Darstellung von Figur 1b zu erkennen sind, die Oberseite der zweiten Komponente 14 der Unterseite der ersten Komponente 12 gegenüberliegt.

Die Darstellung von Figur 1c stellt keine Querschnittsansicht dar, so dass die in den Figuren 1a und 1b schematisch angedeuteten Schlitze in Figur 1c nicht dargestellt sind.

Es ist zu bemerken, dass die in dieser und den anderen Ausführungsbeispielen dargestellten Schlitze 16 lediglich ein Beispiel für die erfindungsgemäß vorgesehenen Öffnungen sind, die auch in anderer Weise realisiert werden können. Die Darstellung der Schlitze 16 ist zudem auch als schematisch zu verstehen und darf nicht als auf die spezielle Darstellung beschränkt verstanden werden.

Figur 2a zeigt eine schematische Sicht einer Oberseite eines zweiten Ausführungsbeispiels eines erfindungsgemäßen Kauelements. Figur 2b zeigt eine schematische Ansicht der Unterseite des Ausführungsbeispiels aus Figur 2a. Figur 2c zeigt eine schematische Seitenansicht des Ausführungsbeispiels aus den Figuren 2a und 2b.

Das Kauelement 2 gemäß dem zweiten Ausführungsbeispiel, das in den Figuren 2a bis 2c dargestellt ist, entspricht weitgehend dem Ausführungsbeispiel aus den Figuren 1a bis 1c, wobei allerdings die Breite der ersten Komponente 12 und der zweiten Komponenten 14 des Kauelements 2 gegenüber dem ersten Ausführungsbeispiel reduziert ist. Zudem weist das Ausführungsbeispiel 2 lediglich zwei Schlitze in der ersten Komponente 12 auf, so dass sich nur zwei Bereiche der zweiten Komponenten 14 oberhalb der ersten Komponente 12 befinden (Figur 2a) und nur ein Bereich unterhalb (Figur 2b).

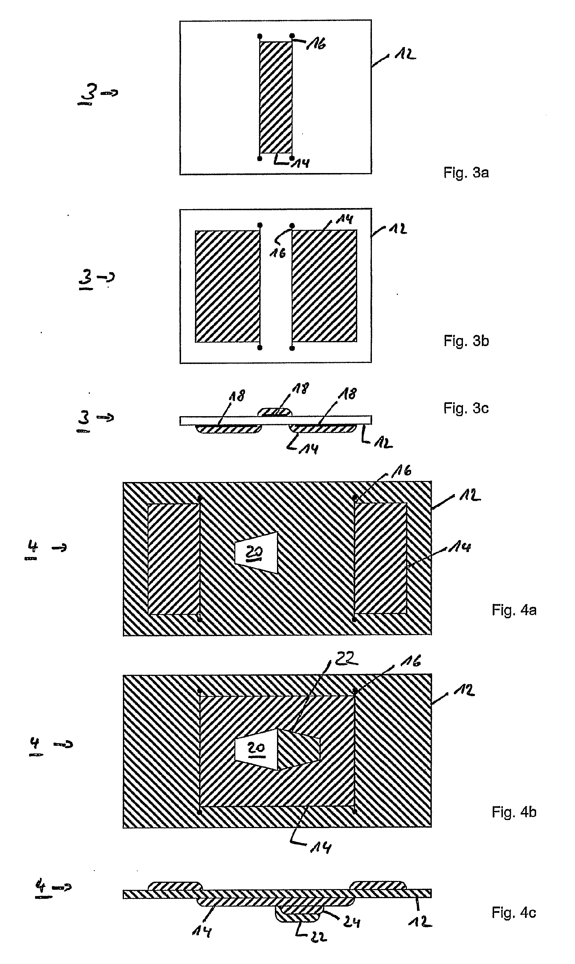

Figur 3a zeigt eine schematische Sicht einer Oberseite eines dritten Ausführungsbeispiels eines erfindungsgemäßen Kauelements. Figur 3b zeigt eine schematische Sicht der Unterseite des Ausführungsbeispiels aus Figur 3a. Figur 3c zeigt eine schematische Seitenansicht des Ausführungsbeispiels aus den Figuren 3a und 3b.

Ähnlich wie im Fall des zweiten Ausführungsbeispiels aus den Figuren 2a bis 2c unterscheidet sich das dritte Ausführungsbeispiel vom ersten Ausführungsbeispiel aus den Figuren 1a bis 1c zunächst einmal dadurch, dass bei dem Kauelement 3 die Größen der ersten und zweiten Komponente 12, 14 (auch relativ zueinander) geändert sind. Ähnlich wie beim zweiten Ausführungsbeispiel weist die erste Komponente 12 auch beim dritten Ausführungsbeispiel nur zwei Schlitze 16 auf, wobei allerdings in diesem Fall im Vergleich zum zweiten Ausführungsbespiel Ober- und Unterseite vertauscht sind.

Abweichend vom ersten und zweiten Ausführungsbeispiel weist das Kauelement 3 des dritten Ausführungsbeispiels zudem ein Haftmittel 18 auf, das jeweils zwischen der Oberseite der zweiten Komponente 14 und der Unterseite der ersten Komponente 12 bzw. der Oberseite der ersten Komponente 12 und der Unterseite der zweiten Komponente 14 angeordnet ist und die jeweiligen Oberflächen miteinander verklebt.

Figur 4a zeigt eine schematische Sicht einer Oberseite eines vierten Ausführungsbeispiels eines erfindungsgemäßen Kauelements. Figur 4b zeigt eine schematische Sicht der Unterseite des Ausführungsbeispiels aus Figur 4a. Figur 4c zeigt eine schematische Seitenansicht des Ausführungsbeispiels aus Figur 4a und Figur 4b.

Hinsichtlich der Anordnung der ersten Komponente 12 und der zweiten Komponente 14 entspricht das Kauelement 4 des vierten Ausführungsbeispiels zunächst einmal weitgehend dem Kauelement 2 aus den Figuren 2a bis 2c des zweiten Ausführungsbeispiels (abgesehen vom Seitenverhältnis).

Abweichend von den bisherigen Ausführungsbeispielen weist das Kauelement 4 in seinem Mittelbereich eine Öffnung 20 auf, die durch Ausstanzen von trapezförmigen Zungenbereichen 22, 24 der ersten und zweiten Komponente 12, 14 und Umlegen dieser Zungenbereiche 22, 24 erstellt wurde.

Um die Öffnung 20 klarer darzustellen, ist abweichend zu den anderen Ausführungsbeispielen in den Figuren 4a bis 4c auch die erste Komponente 12 schraffiert dargestellt.

Wie insbesondere in Figur 4c zu erkennen ist, sind die Zungenbereiche 22, 24 der ersten und zweiten Komponente 12, 14, die durch das Ausstanzen der Öffnung 20 definiert wurden, auf die Unterseite der zweiten Komponente 14 umgelegt, womit eine weitere Verschränkung der ersten und zweiten Komponente erreicht wird.

Abweichend vom hier dargestellten Ausführungsbeispiel ist es zudem möglich, dass lediglich der gegenüberliegende Zungenbereich (vorliegend Zungenbereich 22) umgelegt wird, während der innere Zungenbereich (hier Zungenbereich 24) beim Ausstanzen vollständig entfernt wird.

Zudem ist es als ergänzende und/oder alternative Modifikation möglich, auch einen oder beide der Zungenbereichen 22, 24 sich wiederum durch eine weitere Öffnung (hier nicht dargestellt) der ersten oder zweiten Komponente 12, 14 erstrecken zu lassen, um so die Verschränkungswirkung noch weiter zu verstärken.

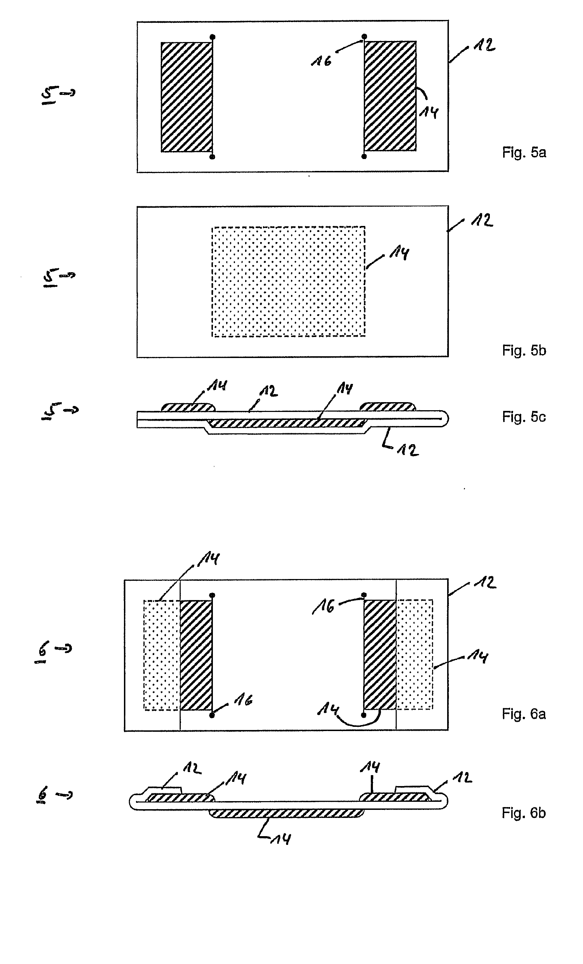

Figur 5a zeigt eine schematische Sicht einer Oberseite eines fünften Ausführungsbeispiels eines erfindungsgemäßen Kauelements. Figur 5b zeigt eine schematische Sicht der Unterseite des Ausführungsbeispiels aus Figur 5a. Figur 5c zeigt eine schematische Seitenansicht des Ausführungsbeispiels aus den Figuren 5a und 5b.

Die grundsätzliche Anordnung der ersten und zweiten Komponente 12, 14 des Kauelements 5 des fünften Ausführungsbeispiels entspricht, ähnlich wie beim vierten Ausführungsbeispiel, abgesehen von den Dimensionen dem zweiten Ausführungsbeispiel aus den Figuren 2a bis 2c. Anders als beim zweiten Ausführungsbeispiel ist allerdings im fünften Ausführungsbeispiel die erste Komponente 12 doppelt gelegt und erstreckt sich somit sowohl oberhalb als auch unterhalb eines Teils der zweiten Komponente 14, wie dies insbesondere in Figur 5c erkennbar ist. Der in Figur 5b punktiert dargestellte Bereich, in dem die Oberseite der zweiten Komponente 14 der Unterseite der ersten Komponente 12 gegenüberliegt, soll in dieser Figur nur schematisch angedeutet sein, da durch das Überlappen des umgelegten Teils der ersten Komponente 12 über dem Teil der zweiten Komponente 14 diese in diesem Bereich so nicht erkennbar ist.

Aus der Seitenansicht in Figur 5c ist zu erkennen, dass die erste Komponente 12 nur außerhalb dieses Bereichs angelegt ist, so dass in der Seitenansicht der untere Bereich der zweiten Komponente 14 zu erkennen ist. Es ist allerdings ebenso möglich, dass die zweite Komponente bzw. der überlappende Teil dieser zweiten Komponente den auf der Unterseite befindlichen Bereich der ersten Komponente 14 vollständig umschließt, also vollständig an sich anliegt.

Figur 6a zeigt eine schematische Sicht einer Oberseite eines sechsten Ausführungsbeispiels eines erfindungsgemäßen Kauelements. Figur 6b zeigt eine schematische Seitenansicht des Ausführungsbeispiels aus Figur 6a.

Wie schon das vierte und fünfte Ausführungsbeispiel entspricht der grundsätzliche Aufbau des Kauelements 6 des sechsten Ausführungsbeispiels dem Aufbau, der mit Bezug auf das zweite Ausführungsbeispiel in den Figuren 2a bis 2c illustriert ist.

Wie auch beim fünften Ausführungsbeispiel ist beim Kauelement 6 des sechsten Ausführungsbeispiels die erste Komponente 12 in ihrer Längsdimension größer ausgelegt und auf sich selbst umgelegt, um dabei die zweite Komponente 14 hier teilweise zu überlappen. Eine Ansicht der Unterseite des Ausführungsbeispiels ist vorliegend nicht dargestellt, da diese Ansicht im Wesentlichen der Ansicht aus Figur 2b entsprechen würde.

Es ist zu bemerken, dass das Überlappen bzw. Umfassen der anderen Komponente nicht auf die erste Komponente 12 beschränkt ist, da es ebenfalls möglich ist, dass die zweite Komponente 14 sich über den Rand der ersten Komponente 12 hinweg erstreckt, um diesen Rand herum greift und somit die erste Komponente 12 umfasst.

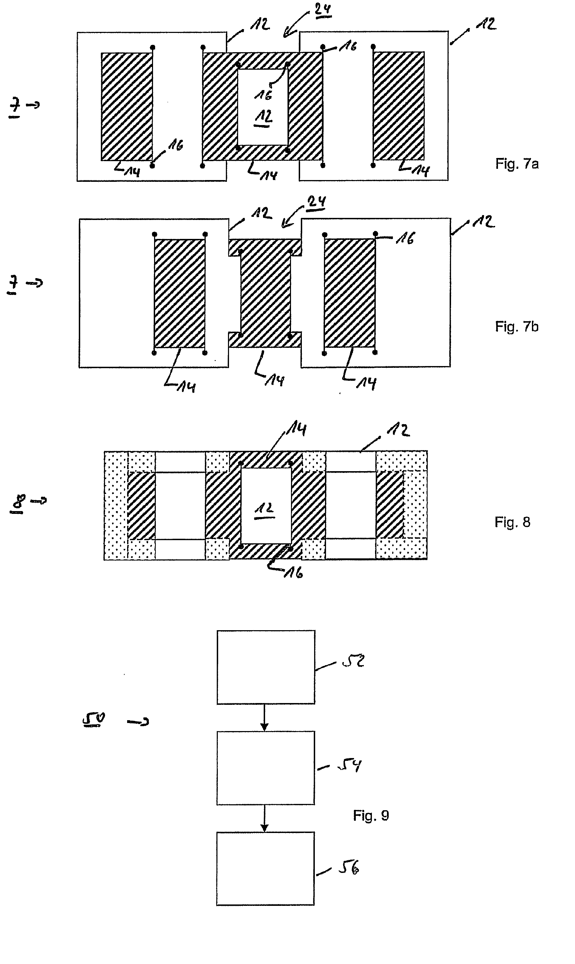

Figur 7a zeigt eine schematische Sicht einer Oberseite eines siebten Ausführungsbeispiels eines erfindungsgemäßen Kauelements, während Figur 7b eine schematische Sicht der Unterseite dieses Ausführungsbeispiels zeigt.

Beim Kauelement 7 des siebten Ausführungsbeispiels sind die Schlitze 16 sowohl in der ersten Komponente 12 als auch in der zweiten Komponente 14 vorgesehen, wobei zudem die erste Komponente 12 einen verschmalerten Bereich 24 aufweist, der in seiner Breite so reduziert ist, dass er durch die Schlitze 16 in der zweiten Komponente 14 hindurch passt.

Anhand der Figuren 7a und 7b ist leicht zu erkennen, dass sich die erste Komponente 12 und zweite Komponente 14 jeweils abwechselnd oberhalb bzw. unterhalb voneinander befinden, so dass abwechselnd eine Oberseite der ersten Komponente 12 an der Unterseite der zweiten Komponente 14 und eine Unterseite der ersten Komponente 12 einer Oberseite der zweiten Komponente 14 gegenüberliegt.

Figur 8 zeigt eine schematische Sicht einer Oberseite einer modifizierten Version des siebten Ausführungsbeispiels aus Figur 7a. Das Kauelement 8 aus Figur 8 stellt insofern eine Modifikation des Kauelements 7 aus Figur 7a dar, als dass die über die Kante der zweiten Komponente 14 hinausstehenden Bereiche der ersten Komponente 12 umgelegt sind, so dass die erste Komponente in diesen Bereichen die zweite Komponente umfasst, wie dies durch die punktierten Bereiche in Figur 8 angedeutet ist.

Ungeachtet der Darstellungen der hier diskutierten Ausführungsbeispiele in den beiliegenden Figuren ist die Erfindung nicht auf eine im Wesentlichen rechteckige Ausführung von Kauelement, erster Komponente und/oder zweiter Komponente beschränkt. Gerundete, runde, ovale oder anderweitig geformte Ausführungen (z.B. Knochenform) sind für das Kauelement, die erste und/oder die zweite Komponente unabhängig voneinander möglich.

Die Erfindung ist auch nicht darauf beschränkt, dass die Dicke der Komponenten und/oder des Kauelements selbst jeweils durchgehend konstant oder im Wesentlichen konstant ist. Es ist ohne weiteres möglich, dass eine jeweilige Dicke der Komponenten über ihre Ausdehnung hin in vorbestimmter oder auch zufälliger Weise schwankt.

Die Erfindung ist ferner nicht darauf beschränkt, dass lediglich eine erste und eine zweite Komponente miteinander verschränkt sind. Zum Einen können die Komponenten in sich Unterkomponenten (z.B. in einem Schichtaufbau) aufweisen. Zum Anderen können auch mehr als zwei Komponenten miteinander verschränkt sein, wobei die Verschränkung paarweise oder auch umfassend sein kann (z.B. kann eine dritte Komponente nur mit der ersten Komponente oder aber mit der ersten und der zweiten Komponente verschränkt sein).

Figur 9 zeigt eine schematische Darstellung eines Ablaufdiagramms eines Ausführungsbeispiels eines erfindungsgemäßen Verfahrens.

Das erfindungsgemäße Verfahren 50, dessen Ablauf in Figur 9 schematisch dargestellt ist, umfasst einen Schritt 52 des Bereitstellens einer ersten und zweiten Komponente zur Herstellung eines Kauelements, bei dem diese Komponenten miteinander verschränkt sind.

In Schritt 54 werden wenigstens zwei Öffnungen an der ersten und/oder zweiten Komponente angebracht, bevorzugt Schlitze.

In Schritt 56 werden die erste und zweite Komponente durch die Öffnungen hindurch so miteinander verschränkt, dass abwechselnd eine Oberseite der ersten oder zweiten Komponente der Unterseite der zweiten oder ersten Komponente und eine Unterseite der ersten oder zweiten Komponente der Oberseite der zweiten oder ersten Komponente gegenüberliegt, wie dies in den vorstehend diskutierten Figuren illustriert ist.

Es ist zu bemerken, dass, ungeachtet der Darstellung in Figur 9, die Erfindung nicht darauf beschränkt ist, dass die einzelnen Teilschritte in genauer dieser Reihenfolge und Anordnung ausgeführt werden. So ist es beispielsweise ohne weiteres möglich, dass die Schritte des Anbringens von Öffnungen des Verschränkens miteinander insofern verwoben sind, als dass eine teilweise Verschränkung bereits hergestellt ist, während noch nicht alle Öffnungen angebracht sind.

Es ist auch möglich, dass die Schritte des Anbringens von Öffnungen und des Verschränkens der ersten und zweiten Komponente miteinander mehrfach ausgeführt werden, wie dies beispielsweise im Fall des vierten Ausführungsbeispiels (siehe Figuren 4a bis 4c) vorliegt.

Ausgangspunkt für ein Kauelement der vorliegenden Erfindung kann ein bekannter Fleischjerky sein, der als Geschmackskomponente beispielsweise eine Größe von 11,5 cm Länge, 3,5 cm Breite und 0,4 cm Dicke aufweist. Eine hierzu passende Rinderhaut als Kaukomponente wäre beispielsweise 11,5 cm lang, 5 cm breit und 0,1 cm dick (bevorzugt 0,3 cm). An zwei Stellen der Rinderhaut wären beispielsweise Schlitze vorzusehen, die eine Länge von 3,5 cm oder mehr, bevorzugt im Bereich von 4-4,5 cm haben.

Bei einem 10-12 cm langen Stück Tierhaut werden bevorzugt mindestens zwei Schlitze vorgesehen, die jeweils mindestens 1 cm vom schmalen Ende der Tierhaut entfernt liegen sollten. Eine besonders gute Trennbeständigkeit der Komponenten wird erreicht, wenn die Schlitze in einem Abstand von 2-3 cm vom schmalen Ende der Tierhaut entfernt angeordnet sind. Es können auch Doppelschlitze vorgesehen werden, durch die ein Fleischjerky als Geschmackskomponente hindurch gesteckt wird. Bei längeren Stücken Tierhaut können auch 3 oder 4 Schlitze vorteilhaft sein, die insbesondere in gleichen Abständen angebracht sind.

Die vorliegende Erfindung ist nicht auf besondere Größen oder Größenverhältnisse beschränkt, wobei die jeweilige Größe Einfluss auf bevorzugte Ausgestaltungen haben kann. Bei einem nahezu quadratischen Kauelement von 6 cm Länge und 5 cm Breite für kleine Hunde kann beispielsweise ein vergleichsweise geringer Abstand zwischen den Schlitzen vorgesehen werden, die somit als Doppelschlitz in etwa der Mitte des Kauelements angeordnet sind. Eine andere für kleine Hunde sinnvolle Größe wäre 5 cm Länge und 1,5 cm Breite.

Bei einer anderen Ausführung kann ein langgestrecktes Kauelement von etwa 2,5 cm Breite und 10-15 cm Länge mit Schlitzen versehen sein, die etwa ein Fünftel bis ein Drittel der Gesamtlänge von der jeweiligen Schmalseite entfernt angeordnet sind.

Für größere Hunde können auch größere Kauelemente vorgesehen sein. Eine Tierhaut als Kaukomponente kann beispielsweise also durchaus eine Länge von 25 cm oder mehr und eine Breite von bis zu 10 cm oder mehr haben.

Das Flächen- und/oder Volumen-Verhältnis von Kaukomponente (z.B. Tierhaut) zu Geschmackskomponente (z.B. Fleischjerky) kann insbesondere im Bereich von 4:1 bis 1:1 vorgesehen werden, bevorzugt im Bereich von 2,5:1 bis 1,2:1, besonders bevorzugt 2:1 bis 1,5:1.

Unabhängig von der Größe können auch jeweils mehrere Geschmackskomponenten und/oder Kaukomponenten vorgesehen werden.

Produktionstechnisch kann das erfindungsgemäße Kauelement beispielsweise so hergestellt werden, dass ein Fleischjerky in einem ersten Trocknungsprozeß auf ca. 55% Feuchtigkeit getrocknet wird (ausgehend vom einem Anteil von 80% Wasser im Fleisch stellt diese Trocknung einen Feuchtigkeitsverlust von 25% dar). Dann wird feuchte Rinderhaut (die auch zunächst getrocknet vorgehalten und dann mit Wasser eingeweicht werden kann, um sie besser verarbeiten zu können) auf die gewünschte Größe geschnitten, zwei Schlitze mit einer Klinge angebracht und der vorgetrocknete Jerky hindurch gesteckt. Anschließend wird beides gemeinsam getrocknet, bis ein Feuchtegehalt zwischen 12 und 28%, idealerweise 16% erreicht ist. Um ein Verziehen oder Verkrümmen des Kauelements während des Trocknungsprozesses zu reduzieren oder ganz zu vermeiden, kann das Kauelement währenddessen gepresst werden.

## Patentansprüche

1. Kauelement (1-8) mit einer ersten Komponente (12) und einer zweiten Komponente (14), wobei die Komponenten (12, 14) wenigstens zwei Öffnungen (16), insbesondere Schlitze (16), aufweisen und derart durch die Öffnungen (16) hindurch miteinander verschränkt sind, dass abwechselnd eine Oberseite der ersten oder zweiten Komponente (12, 14) der Unterseite der zweiten oder ersten Komponente (14, 12) und eine Unterseite der ersten oder zweiten Komponente (12, 14) der Oberseite der zweiten oder ersten Komponente (12, 14) gegenüberliegt.

2. Kauelement (1-8) nach Anspruch 1,
wobei eine der Komponenten (12, 14) wenigstens zwei Öffnungen aufweist.

3. Kauelement (1-8) nach einem der vorstehenden Ansprüche,
wobei eine der Komponenten (12, 14) ein Schlitzpaar (16, 16) oder mehrere Schlitzpaare (16, 16) aufweist, das bzw. die jeweils einen Streifen (17) der einen Komponente definiert bzw. definieren, wobei die andere der Komponenten (12, 14), die in einem Bereich außerhalb des bzw. der Streifen (17) einer Seite der einen Komponente (12, 14) gegenüberliegt, im Bereich des bzw. der Streifen (17) der anderen Seite der einen Komponente (12, 14) gegenüberliegt.

4. Kauelement (4) nach einem der vorstehenden Ansprüche,
wobei wenigstens eine der Komponenten (12, 14) einen umgelegten Zungenbereich (22) aufweist, der sich durch wenigstens eine Öffnung (20) in der anderen Komponente (12, 14) hindurch erstreckt.

5. Kauelement (1-8) nach einem der vorstehenden Ansprüche,
wobei die erste Komponente (12) eine Kaukomponente (12) und die zweite Komponente (12) eine Geschmackskomponente (14) ist.

6. Kauelement (1-8) nach Anspruch 5,
wobei die Kaukomponente (12) wenigstens zwei Schlitze (16) aufweist.

7. Kauelement (1-8) nach Anspruch 5 oder 6,
wobei die Kaukomponente (12) aus Tierhaut besteht oder Tierhaut umfasst, insbesondere Rinderhaut, Schweinehaut, Pferdehaut und/oder Lammhaut.

8. Kauelement (1-8) nach einem der Ansprüche 5 bis 7,
wobei die Geschmackskomponente (14) aus einem Fleischprodukt und/oder einem Fischprodukt besteht oder ein Fleischprodukt und/oder ein Fischprodukt umfasst, insbesondere ein Fleischprodukt auf Basis von Hühnerfleisch, Entenfleisch, Putenfleisch, Kaninchenfleisch, Lammfleisch, Rinderfleisch, Pferdefleisch und/oder Schweinefleisch.

9. Kauelement (5, 6) nach einem der vorstehenden Ansprüche,
wobei eine der Komponenten (12) die andere Komponente (14) an wenigstens einer Kante umfasst.

10. Kauelement (5) nach Anspruch 9,
wobei sich das Umfassen der einen Komponente (12) über die gesamte andere Komponente (14) erstreckt.

11. Kauelement (3) nach einem der vorstehenden Ansprüche,
wobei wenigstens ein Teil der einen Oberseite der ersten oder zweiten Komponente (12, 14) an der Unterseite der zweiten oder ersten Komponente (14, 12) und/oder ein Teil der einen Unterseite der ersten oder zweiten Komponente (12, 14) an der Oberseite der zweiten oder ersten Komponente (14, 12) anhaftet.

12. Kauelement (3) nach Anspruch 11,
wobei das Anhaften durch ein Haftmittel (18) unterstützt wird, insbesondere durch ein Haftmittel (18) auf Basis von Stärke, Sojaprotein, Gluten, Eiverbindungen und/oder Eipulver.

13. Verfahren (50) zur Herstellung eines Kauelementes (1-8) mit einer ersten Komponente (12) und einer zweiten Komponente (14), die miteinander verschränkt sind, mit den Schritten:
- Bereitstellen (52) der ersten und zweiten Komponente (12, 14),
- Anbringen (54) von wenigstens zwei Öffnungen (16), insbesondere Schlitzen (16), an der ersten und/oder zweiten Komponente (12, 14),
- Verschränken (56) der ersten und zweiten Komponente (12, 14) durch die Öffnungen (16) hindurch miteinander, derart, dass abwechselnd eine Oberseite der ersten oder zweiten Komponente (12, 14) der Unterseite der zweiten oder ersten Komponente (14, 12) und eine Unterseite der ersten oder zweiten Komponente (12, 14) der Oberseite der zweiten oder ersten Komponente (14, 12) gegenüberliegt.
